# EUROPEAN PATENT APPLICATION

(11) **EP 4 378 310 A1**
(43) Date of publication of application: **05.06.2024**
(21) Application number: 23212868.6
(22) Date of filing: 29.11.2023
(51) Int. Cl.: A01N 31/16, A01N 65/08, C05F 7/00, A01P 13/00, A01P 21/00

(54) **USE OF HYDROXYTHYROSOL (HT) AND ITS DERIVATIVES AS A PHYTOREGULATOR**

(30) Priority: 29.11.2022 ES 202231026
(71) Applicant: Biopharma Research S.A., 14100 La Carolina Córdoba (ES)
(72) Inventor: Nieto del Río, Juan, 14100 La Carolina (ES); Fernández Navarro, Juan, 14100 La Carolina (ES)
(74) Representative: Sahuquillo Huerta, Jesús

(57) **Abstract**

A formulation comprising an extract containing hydroxytyrosol (C8H1003) and its derivatives, Tyrosol (C8H1002), Vanillic Acid (C8H804) and its glycoconjugated forms, Hydroxytyrosol Glycoside (C14H2008) and Vanillin Glycoside (C14H1808) for use as an agricultural phytoregulator with herbicidal or biostimulant activity.

## Description

The present invention is included in the field of biochemistry, plant physiology and agriculture. It is based on the use of hydroxytyrosol and/or its derivatives and compositions or formulations containing them as phytoregulators to enhance crop growth, as well as herbicide or plant cover growth controller in organic and conventional agriculture in pre-sowing, pre-emergence, and post-emergence.

The present invention is referred to the use as phytoregulator, of the active principle Hydroxytyrosol (C8H10O3) and/or its derivatives Tirosol (C8H10O2), Vanillic Acid (C8H8O4) and its glycoconjugated forms: Hydroxytyrosol Glycoside (C14H20O8) and Vanillin Glycoside (C14H18O8), with plant biostimulant activity and herbicidal capacity for pre-planting, pre-emergence, or post-emergence cover crop management.

Plant organisms are capable of synthesizing different types of active compounds, normally from secondary metabolism, which are responsible for regulating different physiological processes of the plant. This physiological regulation is carried out either by an internal effect of the plant, with reactions such as photosynthesis, nutrient transport, redox metabolism, etc. or as a regulation against external agents such as infections, the appearance of pests or the presence of competitors. These external agents are the ones that generate serious problems in the performance of agricultural crops around the world, which has led agriculture in recent years to demand a large amount of chemical compounds to increase its productivity. Today, legislation is prohibiting the use of polluting products that are harmful to health, so the demand for non-polluting agricultural inputs generated from botanical extracts is growing exponentially, allowing crops to be managed with guarantees of food safety and respect for the environment without detriment to crop productivity.

In this sense, the extraction and purification of non-toxic biomolecules or extracts and the development of new inputs aimed at increasing crop profitability, either by promoting plant development or by controlling plants that compete for resources with cultivated plants, are important.

Polyphenols are a very broad chemical family that has more than 8000 different compounds (Pandey & Rizvi, 2009), among which are flavanols, flavones, flavanones, isoflavones, anthocyanidins and flavanols (Quiñones et al., 2012).

Hydroxytyrosol (3,4 - dihydroxyphenyl ethanol) is a phenolic alcohol described for its properties in terms of biological effects on human health as a cardioprotective, neuroprotective and anticancer (Rodriguez-Morato et al., 2015). The known activities of this phenol are due to its antioxidant capacity. Its derivatives for the purposes of this invention are tyrosol and vanillic acid, in addition to their glucoconjugates, hydroxytyrosol glucoside and vanillin glucoside.

The empirical formulas for these active ingredients are C8H10O3 for hydroxytyrosol, C8H10O2 for tyrosol, C8H8O4 for vanillic acid, C14H20O8 for hydroxytyrosol glycoside and C14H18O8 for vanillin glycoside.

The use of plant by-products and the isolation of polyphenolic compounds can have different uses of interest, including the use of a hydroxytyrosol extract and/or its derivatives as a phytoregulator with biostimulant effect that promotes plant development and as a phytoregulator with herbicidal properties for use in agriculture as a plant canopy controller. The application of extracts and uses such as those described below as plant phytoregulators are unknown in the prior art.

Document ES2408134 describes the use of a solution obtained from the washing water of green olives to promote plant growth, as well as a procedure for obtaining it. The aqueous solution preferably comprises between 9 and 23 g/L of sugars and between 2.2 and 5.4 g/L of phenolic compounds, namely hydroxytyrosol (from 2 to 5 g/L, i.e. from 2000 to 5000 ppm) and tyrosol (from 0.2 to 0.4 g/L, i.e. from 200 to 400 ppm). The paper describes trials conducted on tomato plants, whose treatment with this solution for two months produced significant effects on plant height, number of flowers per plant, number of fruits and cumulative production, which were twice as high as in plants treated with distilled water.

The paper [YANGUI, T. et al. Food Chemistry 2009, Vol. 117, No. 1, pp. 1-8] reports the biostimulant capacity of oil mill wastewater rich in hydroxytyrosol and compositions with high concentrations of this polyphenol. Tests carried out with a composition rich in hydroxytyrosol, at a concentration of 10% in dry weight with respect to volume, showed that it behaves as a potent exogenous growth enhancer, stimulating the vigor of tomato and melon seedlings, according to conventional parameters for seed vigor. Thus, the addition of this composition resulted in significantly higher germination percentage, shoot weight and height, and root length compared to untreated seeds. In addition, the hydroxytyrosol-rich composition proved to be an effective disinfectant against seed and root diseases, allowing the control of fungal wilt diseases at the pregermination stage and root rot caused by *Fusarium sambucinum* and *Alternaria solani,* as well as other seed-borne bacterial pathogens.

On the other hand, in [LADHARI, A. et al. Waste and Biomass Valorization 2021, Vol. 12, pp. 3657-3669] a study is reported that demonstrates the antioxidant and phytotoxicity properties of oil industry wastes, particularly olive leaves, olive mill wastewater and solid wastes, and their possible application in food and agriculture. These properties reside in their components, which are phenolic compounds, mainly hydroxytyrosol and oleuropein, the most abundant in methanolic extracts of leaves and olive mill wastewater, respectively, found in concentrations of 13.05 and 4.39 mg/g solid weight.

In [EL-ABBASSI, A. et al. Science of the Total Environment 2017, Vol. 576, pp. 10-21] is a review on the properties and potential uses of olive mill wastewater, which include its value as a soil fertilizer, due to its high content of organic matter and mineral nutrients, and its antimicrobial activity and for the control of plant pathogens. Specifically, the paper discloses the ability of this wastewater, whose main polyphenolic component is hydroxytyrosol, to suppress the growth of the main bacterial and fungal phytopathogens and different species of weeds, without having negative effects on crop growth.

In [PARVIN, K. et al. Plant Physiology and Biochemistry 2020, Vol. 150, pp. 109-120] he discloses the ability of vanillic acid to induce salt tolerance in tomato and improve salt-retarded plant growth (see page 119, section 5) by a mechanism affecting its glyoxalase and antioxidant defense systems. Thus, in trials with salt-treated tomato seedlings, exogenous vanillic acid was able to reduce osmotic and ionic toxicity, increasing the relative water content and proline level and lowering the Na+/K+ ratio. In addition, vanillic acid up-regulates components of the plant antioxidant system, resulting in reduced reactive oxygen species (ROS) production, lipoxygenase activity and cell membrane damage. On the other hand, vanillic acid application causes the reduction of toxic methylglyoxal accumulation, which occurs under salt stress conditions, through an enhancement of the glyoxalase system.

It is an object of the present invention to use a compound, preferably purified and preferably obtained as a by-product of the olive industry which promotes plant development and the control of germination and growth of unwanted plants in agricultural cultivation. These objects are achieved by means of the claims accompanying the present specification.

The inventors have demonstrated that Hydroxytyrosol (HT) and its derivatives act as a phytoregulator, both to promote the growth of agricultural crops and to control the growth of plants that compete with the crop, exerting a potent herbicidal effect. In this sense, the present invention demonstrates that HT and its derivatives are a so-called allelochemical compound with allelopathic activity, since it provides benefits by biostimulating plant physiology with positive effects on its development and, on the other hand, it is also capable of inducing negative effects on other plants, preferably weeds, inhibiting their germination and preventing their growth.

This dual activity is dose-dependent, so that above a threshold concentration of the addition of hydroxytyrosol or its derivatives, it has a phytotoxic and allelopathic action against plant competitors growing in the crop environment, preventing the germination and development of plants that compete with a crop for resources, while at very low concentrations it has a plant growth promoting effect.

The inventors have verified that the use of Hydroxytyrosol and its derivatives when applied with a range of concentrations between 200 and 112000 ppm, preferably between 350 and 12000 ppm, allows to reduce the germination of seeds of herbaceous plants belonging to the narrow-leaved and broad-leaved group; and allows to interrupt the development of narrow-leaved and broad-leaved plants, acting as a herbicide.

Likewise, they have generated convincing evidence that the use of hydroxytyrosol and its derivatives when applied with a concentration range between 30 and 200 ppm, preferably between 30 and 50, presents a high efficiency as a physiological biostimulant, enhancing the growth and development of plants and their fruits.

In a practical embodiment of the invention, the formulation comprises an adjuvant selected from: oil-based adjuvants and mixtures, organosilicone-based adjuvants and mixtures, nonionic-based adjuvant and mixtures, polymeric-based adjuvants and mixtures, fatty acid-based adjuvants and mixtures and combinations thereof.

For the purposes of the present invention the term phytoregulator refers to any compound capable of inducing the growth of plants, preferably agricultural crops. For the purposes of the present invention, said term also refers to those compounds which are capable of inhibiting the growth of weeds, thus having herbicidal activity. For the purposes of the present invention, the term herbicide refers to any chemical compound capable of controlling or eliminating undesirable plant species.

For the purposes of the present invention, the term biostimulant refers to one or more active compounds that when applied to crop plants, seeds or roots (rhizosphere), stimulates biological processes, improving the availability of nutrients, optimizing their absorption or that increases tolerance to abiotic stresses or improves crop productivity or quality. A biostimulant increases crop yields in general.

For the purposes of the present invention the term "HT-rich extract" or "HT solution" refers to an extract preferably obtained from by-products of the olive oil industry and/or the table olive dressing industry, mixture of said by-products or fractions obtained from the by-products or mixtures thereof, comprising at least 30 ppm of HT and/or its derivatives tyrosol, vanillic acid and their glycoconjugated forms: hydroxytyrosol glycoside and vanillin glycoside or precursors containing the HT molecule .

For the purposes of the present invention, the term "plant cover" refers to the presence of unwanted plant species in the productive cycle of a crop, commonly referred to as "weeds".

Throughout the description and the claims, the word "comprises" and variants thereof are not intended to exclude other technical features, additives, components or steps. To those skilled in the art, other objects, advantages, and features of the invention will be apparent in part from the invention and in part from the practice of the invention. The following examples and drawings are provided by way of non-limiting illustration and are not intended to restrict the present invention. Furthermore, the invention covers all possible combinations of particular and preferred embodiments indicated herein.
FIG. 1 shows the *in vitro* plates used to analyze the germination of *Lolium rigidum* seeds in a control treatment and with HT-rich extract treatment.
FIG. 2 shows the "Box and Whiskers" graph representing the measurements of emerged radicle of *Lolium rigidum* seed, grown *in vitro,* in a control treatment and with HT solution treatment.
FIG. 3 Comparison of the herbicidal effect of different concentrations of HT-rich extract on germination with respect to the control, according to the Two-sided Dunnet's Multiple Comparison Test α=0.05.
FIG. 4 shows the germination control of *Lolium rigidum,* grown *in vivo,* with HT-rich extract treatment "HT D1", 350 ppm (image A); "HT D2", 5000 ppm (image B) and "HT D3", 12000 ppm, compared to a control treatment with water alone.
FIG. 5 shows the control of vegetative development of *Lolium rigidum* plant, grown *in vivo,* with a treatment with HT solution at the concentrations, from left to right, "HT D1", 350 ppm; "HT D2", 5000 ppm and "HT D3", 12000 ppm and a control treatment, only with water.
FIG.6a shows the germination of the maize *(Zea mays)* plant, under field conditions, after the application of a commercial herbicide.
FIG. 6b shows the germination of maize *(Zea mays)* plant, under field conditions, after application of HT solution.
FIG. 6c shows the germination of the maize *(Zea mays)* plant, under field conditions, after application of a conventional herbicide.
FIG. 6d shows the germination of the maize *(Zea mays)* plant, under field conditions, after application of a control treatment.
FIG. 7a shows the onset of maize *(Zea mays)* plant vegetative development and canopy germination control, under field conditions, after application of a vinegar-based organic herbicide.
FIG. 7b shows the onset of vegetative development of the maize *(Zea mays)* plant and the control of canopy germination, under field conditions, after application of a HT solution.
FIG. 7c shows the onset of vegetative development of the maize *(Zea mays)* plant and the control of canopy germination, under field conditions, after application of a conventional herbicide.
FIG. 7d shows the onset of vegetative development of the maize *(Zea mays)* plant and canopy germination control, under field conditions, after application of a control treatment.
FIG. 8a shows the end of maize *(Zea mays)* plant vegetative development and canopy germination control, under field conditions, after application of a vinegar-based organic herbicide.
FIG. 8b shows the end of vegetative development of the maize *(Zea mays)* plant and the control of canopy germination, under field conditions, after application of a HT solution.
FIG. 8c shows the end of vegetative development of the maize *(Zea mays)* plant and the control of canopy germination, under field conditions, after application of a conventional herbicide.
FIG. 8d shows the end of maize *(Zea mays)* plant vegetative development and canopy germination control, under field conditions, after application of a control treatment.
FIG. 9 shows histochemical staining with 3,3 - Diaminobenzidine (DAB) to observe the accumulation of reactive oxygen species (brown stains in the tissue). Left, tissue treated with HT extract; Right, tissue condition in control treatment.
FIG. 10 shows the grams of tomato produced by plants treated with an HT extract and tomatoes produced by a Control treatment.
FIG. 11 Visual comparison of plant condition after the different treatments. Negative control, stress process and return to water irrigation; Positive control, no stress process, and no interruption of water irrigation; "HT extract", stress process and return to water irrigation and treatment with a HT extract.
FIG. 12 Comparison of specific weight in olive fruit, in g/L, in trees treated with HT extract and trees with a Control treatment.
FIG. 13 Comparison of polyphenol accumulation in olive fruit from trees treated with HT extract and trees with Control treatment.
FIG. 14 Comparison of the accumulation of the terpenes maslinic acid and oleanolic acid in olive fruit from trees treated with an HT extract and trees with a Control treatment.

In the following, the invention will be explained by means of tests and evidence that demonstrate the usefulness and effectiveness of the product of the invention. The starting point is an extract rich in HT obtained and purified from by-products of the olive industry.

Analysis of the phytoregulatory activity of HT-rich extract as herbicide.

### Test 1

The HT-rich extract was tested on the germination of *Lolium rigidum* seeds, *in vitro,* arranged on filter paper, moistened with 2 ml of distilled water and 1 ml of HT solution or 3 ml of distilled water in the case of the control treatment. The HT-rich extract concentrations were "HT D1", 350 ppm; "HT D2", 5000 ppm and "HT D3", 12000 ppm. Plates were maintained under ideal long-day conditions in climatic chamber (16h light, 8h dark; ± 25°C; 70%Hr and 150 µmol m⁻² s ). ⁻¹

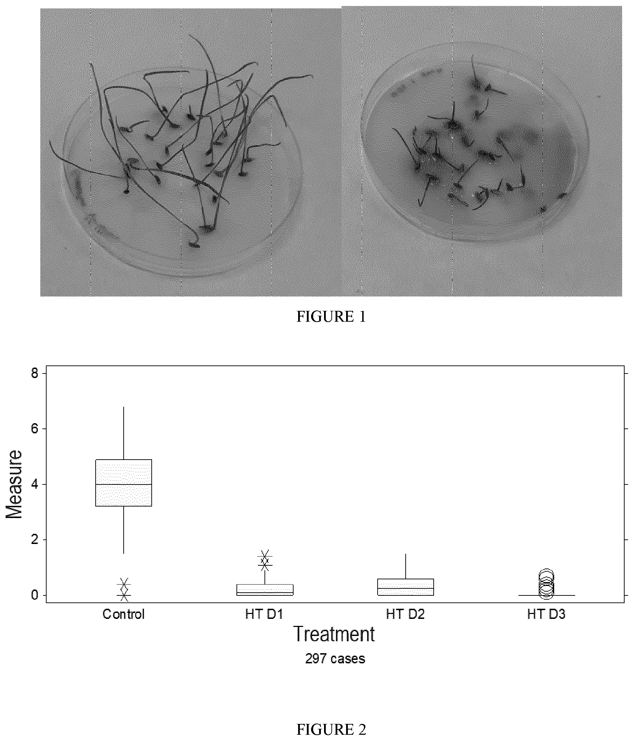

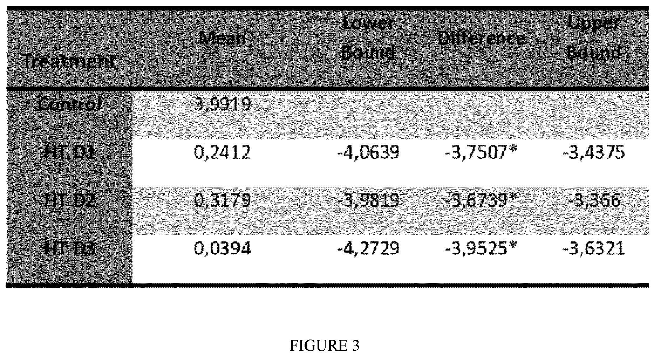

Once the treatments were carried out, the plates were maintained until the seeds corresponding to the control treatment germinated as shown in Figure 1. The results of the test of the HT solution versus the control are shown in Figure 2 and 3, where significant differences are represented according to the Dunnet's two-way multiple comparison test, showing differences in the germinated root size of 3.7 cm, with HT D1; 3.65 cm, with HT D2 and 3.9 cm, with HT D3 versus 3.99 cm of total germinated root length in the control treatment.

### Test 2

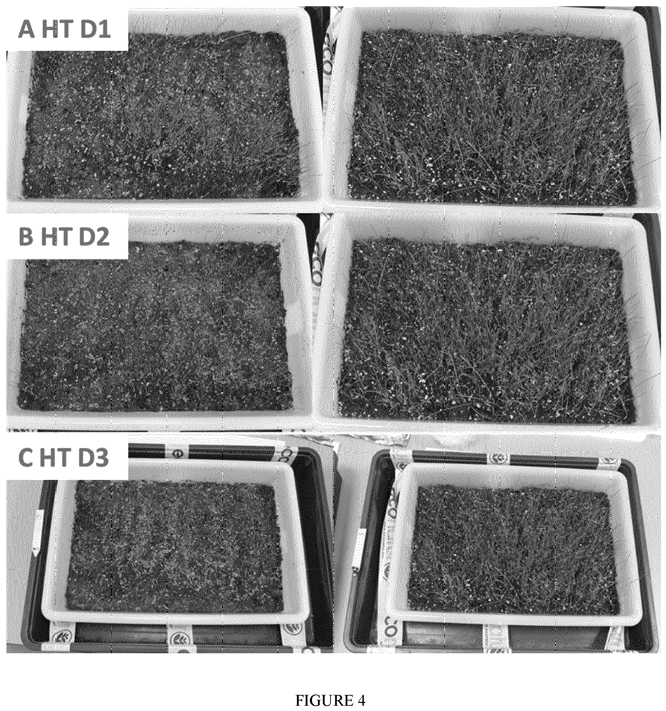

The HT solution was applied at concentrations "HT D1", 350 ppm; "HT D2", 5000 ppm and "HT D3", 12000 ppm, on *Lolium rigidum* seeds under controlled conditions in climatic chamber configured in long day (16h light, 8h dark; ± 25°C; 70%Hr and 150 µmol m⁻² s⁻¹ *) in vivo,* for germination control. The HT solution applied on *Lolium rigidum* seeds, shown in Figure 4, had different levels of germination control, compared to the germination of the control tray. "HT D1", controlled germination of 54% of the sown area; "HT D2", controlled germination of 80% of the sown area and "HT D3", controlled germination of 100% of the sown area.

### Test 3

The HT solution was applied at doses of 350 ppm, 5000 ppm and 12000 ppm on developed *Lolium rigidum* plants, under controlled conditions in climatic chamber set up in long day (16h light, 8h dark; ± 25°C; 70%Hr and 150 µmol m⁻² s⁻¹ *) in vivo,* for growth control. The applied HT solution, shown in Figure 4, arrested the development of *Lolium rigidum* plants. *Lolium rigidum* plants belonging to the control treatment remained green, while those treated with the HT solution lost their pigmentation.

### Test 4

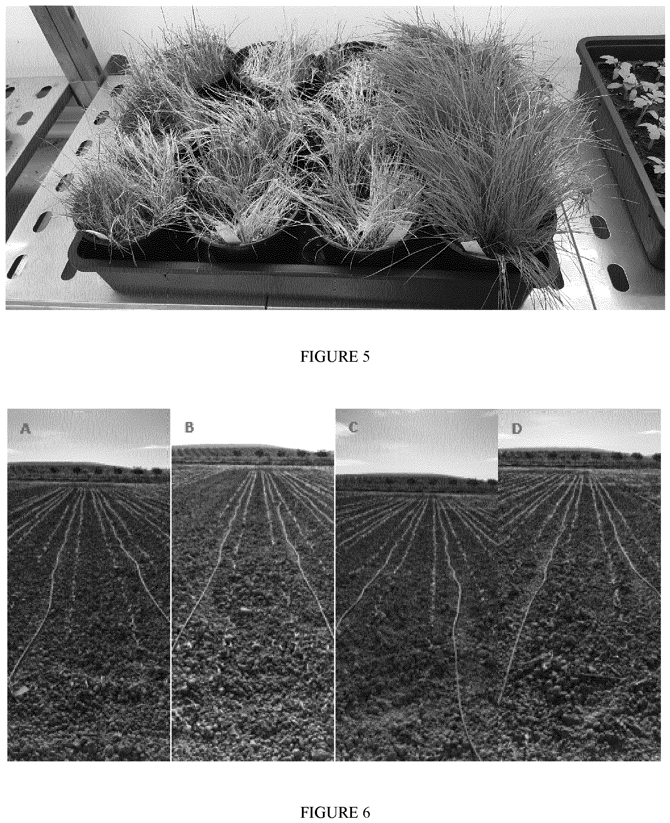

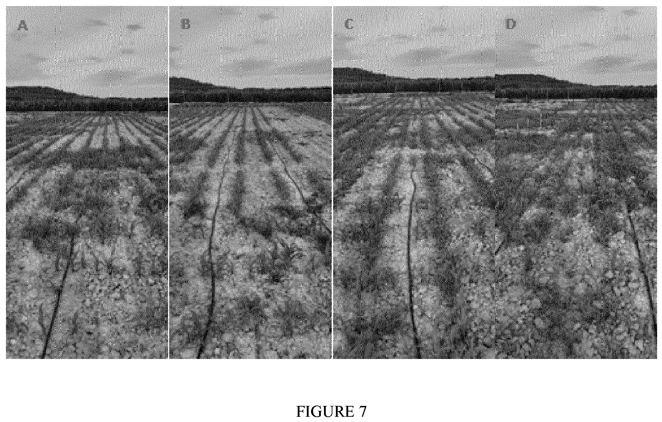

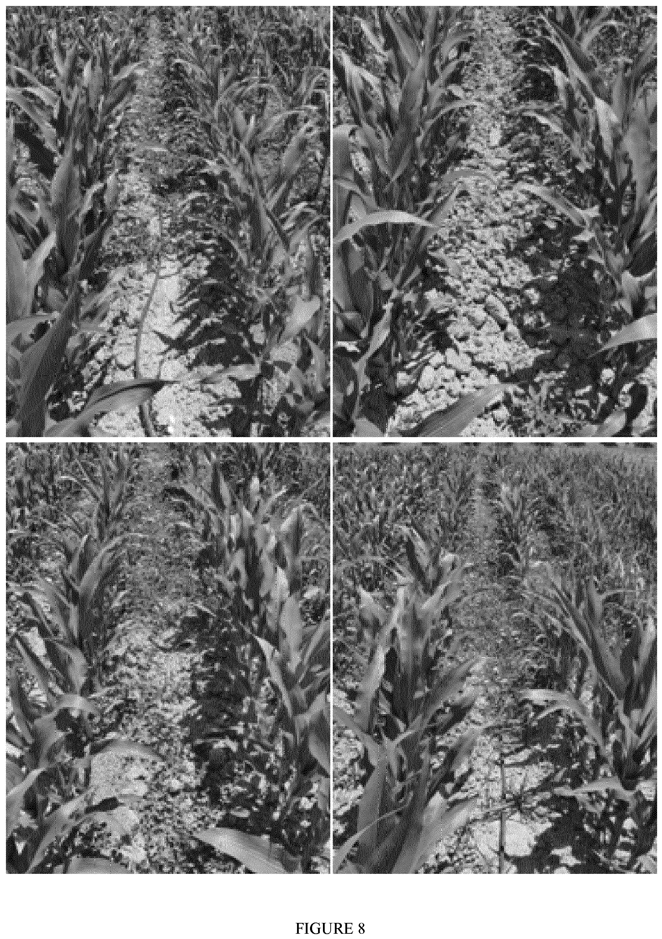

HT solution at a concentration of 12000 ppm on canopy germination in a maize *(Zea mays)* crop, under pre-emergence conditions. The applied HT solution, shown in Figure 6b, 7b and 8b, allowed the corn seed to germinate and stopped the germination of the plant cover in the applied area. The application of the organic control, acetic acid solution, shown in Figures 6a, 7a and 8a, allowed the corn seed to germinate, but did not stop the germination of the vegetative cover of the applied area. The application of the conventional control, composed of the active ingredients S-Metolachlor 31.25% + Terbuthylazine 18.75%, shown in Figures 6c, 7c and 8c, allowed the corn seed to germinate, but did not stop the germination of the plant cover of the applied area. Figures 6d, 7d and 8d show the state of the control thesis, with management without herbicide application, where both the ground cover and the corn germinated.

Analysis of the phytoregulatory activity of the invention as a growth stimulator.

### Test 5

The HT-rich extract was tested on the development of tomato plants (*Solanum lycopersicum* cv. Micro-Tom). Plants were maintained under ideal long-day conditions in climatic chamber (16h light, 8h dark; ± 25°C; 70%Hr and 150 µmol m⁻² s⁻¹ ) until they reached their vegetative development stage. At this time, oxidative stress was induced in the plant, causing water stress, to accumulate reactive oxygen species in the plant tissue.

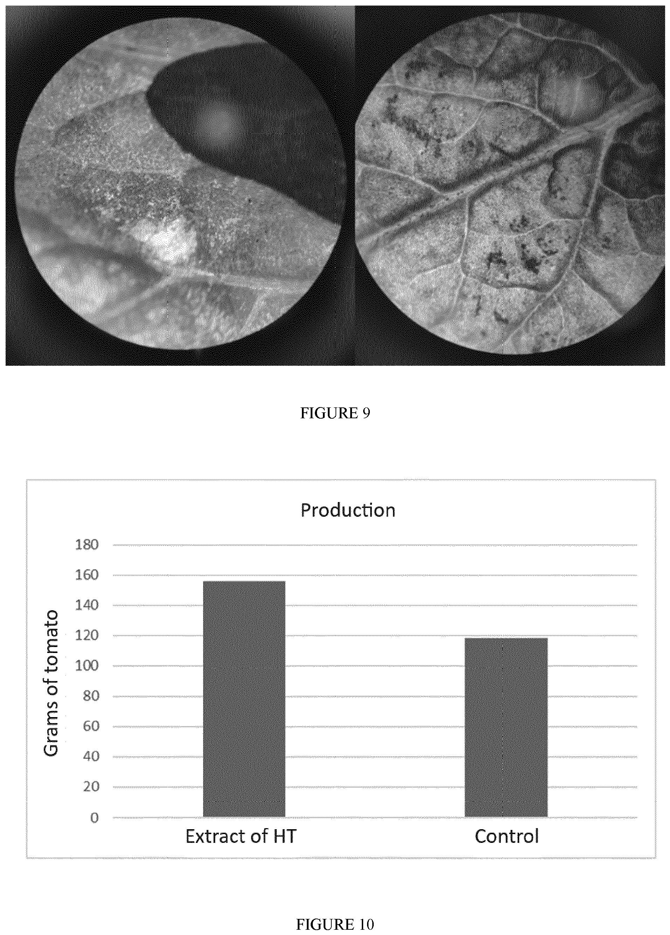

Once water stress was induced in the plant, treatments were performed with the HT-rich extract at a dose of 30 ppm. The biostimulant effect was evaluated by performing a histochemical staining to observe the accumulation of reactive oxygen species, immersing the plant tissue in a 0.01% solution of 3,3 - Diaminobenzidine (DAB). The comparison between the tissue treated with an HT extract and a control treatment is shown in Figure 9. The HT-rich extract applied after a stress process allowed the tomato plant to produce more grams of tomato compared to the control, as can be seen in Figure 10.

### Test 6

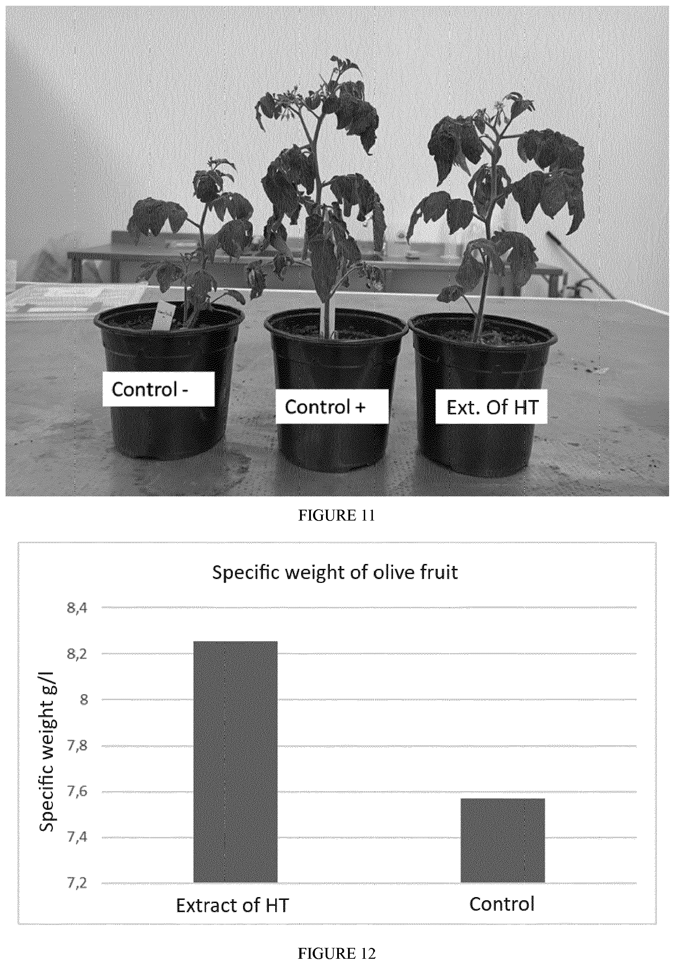

The HT-rich extract was applied at a concentration of 50 ppm on a commercial olive crop to evaluate the effect on crop productivity and olive nutritional value. The HT-rich extract applied increased the specific weight of the olive fruit by 1% (0.77 g/L), compared to the control treatment, as can be seen in the graph in Figure 12.

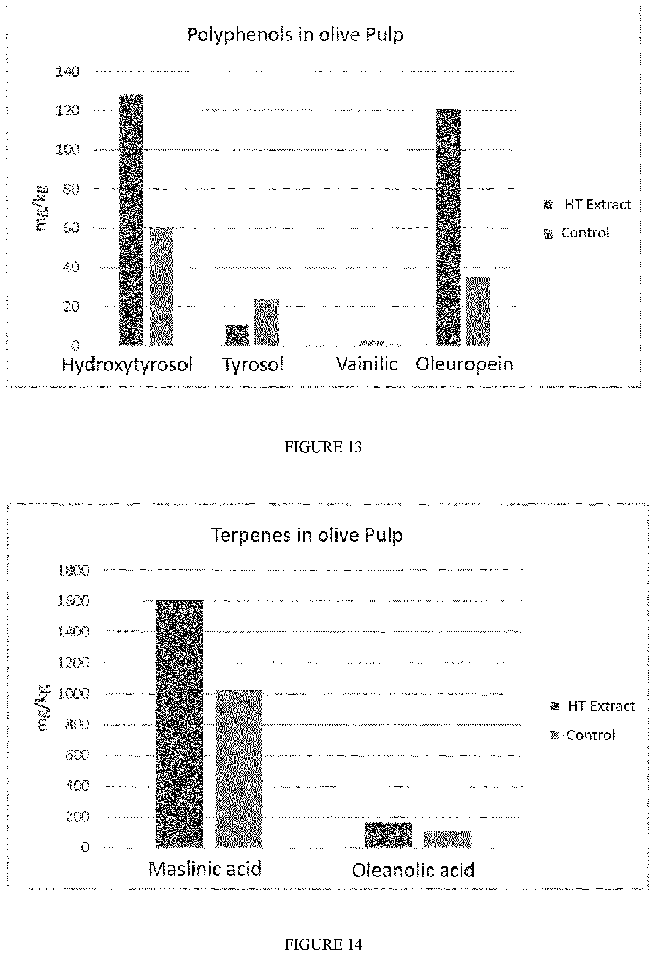

The HT-rich extract applied allowed a higher concentration of the polyphenols hydroxytyrosol and oleuropein to accumulate in the olive pulp. The concentration of hydroxytyrosol increased with respect to the control by 53% and the concentration of oleuropein increased by 71% with respect to the control, as can be seen in the graph in Figure 13.

The HT-rich extract applied allowed a higher concentration of the triterpenes maslinic acid and oleanolic acid to accumulate in the olive pulp. The concentration of maslinic acid increased with respect to the control by 36% and the concentration of oleanolic acid increased by 33% with respect to the control, as can be seen in the graph in Figure 14.

## Claims

1. A formulation comprising an extract containing hydroxytyrosol (C8H10O3) and its derivatives, Tyrosol (C8H10O2), Vanillic Acid (C8H8O4) and its glycoconjugated forms, Hydroxytyrosol Glycoside (C14H20O8) and Vanillin Glycoside (C14H18O8) for use as an agricultural phytoregulator with herbicidal or biostimulant activity.

2. The formulation of claim 1 comprising an adjuvant selected from:
oil-based adjuvants and blends, organosilicone-based adjuvants and blends, nonionic-based adjuvants and blends, polymeric-based adjuvants and blends, fatty acid-based adjuvants and blends and combinations thereof.

3. Use of the formulation of claim 1 or 2 as an herbicide with a concentration between 200 and 112000 ppm of hydroxytyrosol extract, preferably between 350 and 12000 ppm of hydroxytyrosol extract.

4. Use of the formulation of claim 1 or 2 as a biostimulant that enhances the growth or development of agricultural crops with a concentration between 30 and 200 ppm of hydroxytyrosol extract, preferably between 30 and 50 ppm of hydroxytyrosol extract.
